# EUROPEAN PATENT SPECIFICATION

(11) **EP 3 136 643 B1**
(45) Date of publication and mention of the grant of the patent: **05.02.2020**
(21) Application number: 16186401.2
(22) Date of filing: 30.08.2016
(51) Int. Cl.: H04L 5/00, H04L 27/26, H04L 1/00

(54) **ADAPTIVE BIT LOADING AND POWER ALLOCATION AND SIGNALING IN AN OPTICAL OFDM SYSTEM**
ADAPTIVE BITLADUNGS- UND LEISTUNGSZUWEISUNG UND SIGNALISIERUNG IN EINEM OPTISCHEN OFDM SYSTEM
AFFECTATION ADAPTATIVE DE PUISSANCE ET DE CHARGEMENT BINAIRE ET SIGNALISATION DANS UN SYSTÈME OFDM OPTIQUE

(30) Priority: 31.08.2015 CN 201510548250
(43) Date of publication of application: 01.03.2017
(73) Proprietor: Huawei Technologies Co., Ltd., Longgang District Shenzhen, Guangdong 518129 (CN)
(72) Inventor: SHUAI, Jialong, Shenzhen, Guangdong 518129 (CN); CUI, Zhenwei, Shenzhen, Guangdong 518129 (CN)
(74) Representative: Pfenning, Meinig & Partner mbB

(56) References cited:
- GB-A- 2 485 415
- US-B1- 6 829 307
- GIACOUMIDIS E ET AL: "Adaptive loading algorithms for IMDD optical OFDM PON systems using directly modulated lasers", JOURNAL OF OPTICAL COMMUNICATIONS AND NETWORKING, INSTITUTE OF ELECTRICAL AND ELECTRONICS ENGINEERS, US, vol. 4, no. 10, 1 October 2012 (2012-10-01), pages 769-778, XP011469299, ISSN: 1943-0620, DOI: 10.1364/JOCN.4.000769
- JIN X Q ET AL: "Experimental Demonstrations and Extensive Comparisons of End-to-End Real-Time Optical OFDM Transceivers With Adaptive Bit and/or Power Loading", IEEE PHOTONICS JOURNAL, IEEE, USA, vol. 3, no. 3, 1 June 2011 (2011-06-01), pages 500-511, XP011485092, ISSN: 1943-0655, DOI: 10.1109/JPHOT.2011.2154380

## Description

### TECHNICAL FIELD

The present invention relates to the field of communications technologies, and in particular, to a communication method, a transmit end, a receive end, and a system.

### BACKGROUND

Orthogonal frequency division multiplexing (OFDM) is a multi-carrier modulation technology. In the OFDM technology, data is transmitted by using multiple mutually orthogonal subcarriers in a frequency domain.

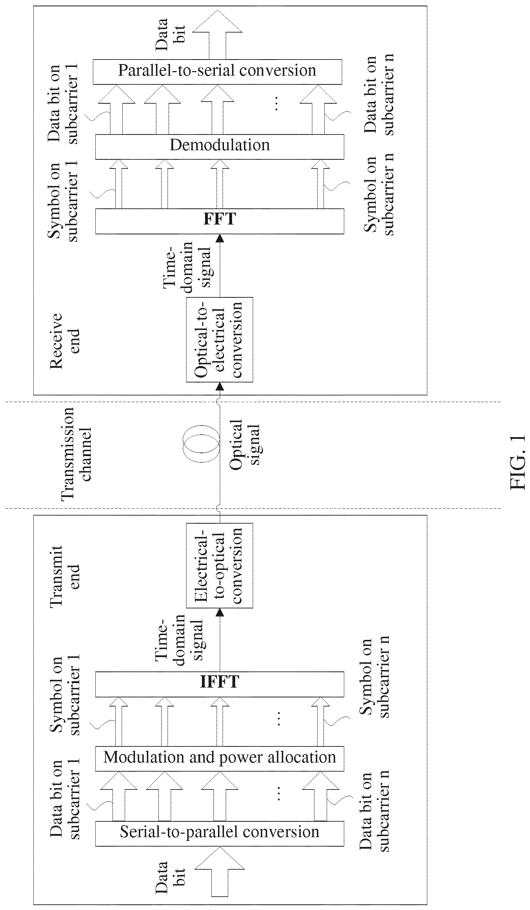

As shown in FIG. 1, an optical OFDM system includes a transmit end, a transmission channel, and a receive end. In a normal case, a process in which data bits in the optical OFDM system are sent from the transmit end to the receive end through the transmission channel is as follows:

At the transmit end, serial-to-parallel conversion is performed on the data bits to obtain data bits that are allocated to n subcarriers. At a stage of modulation and power allocation, a data bit on each subcarrier are modulated to a symbol according to the following modulation parameter table 101 (where a power allocation ratio refers to a ratio of power allocated to the subcarrier to total transmit power), and the symbol is then carried on the subcarrier. After the modulation is completed, symbols on all subcarriers are transformed to time domain electrical signals through inverse fast Fourier transformation (IFFT), and the time domain electrical signals are converted to optical signals through electrical-to-optical conversion, and the optical signals are transmitted through the transmission channel to the receive end.

**Table 101**

| Subcarrier index | Modulation order | Power allocation ratio |
|---|---|---|
| 1 | 5 | 0.2 |
| 2 | 5 | 0.15 |
| 3 | 4 | 0.15 |
| ... | ... | ... |
| n | 2 | 0.05 |

At the receive end, the received optical signals are converted to time-domain signals through optical-to-electrical conversion, and the symbols on the n subcarriers are obtained through fast Fourier transformation (FFT), demodulation is then performed on the symbols on the n subcarriers according to the modulation parameter table 101 to obtain data bits on the n subcarriers, and serial data bits are finally output through parallel-to-serial conversion.

A process of generating the foregoing modulation parameter table 101: the transmit end sends a detection wave, the receive end calculates a signal to noise ratio (SNR) of each subcarrier according to the detection wave, to generate the following SNR table 102, and then a modulation order and power information (in Table 1, an example of power information is a power allocation manner) of each subcarrier may be obtained through calculation according to a SNR of each subcarrier in Table 102, to obtain the modulation parameter table 101. The receive end sends the obtained modulation parameter table 101 to the transmit end, where a modulation order corresponds to a mapping relationship between a bit and a symbol, for example, quadrature phase shift keying (QPSK) modulation, one modulation code table includes four different phase symbols, and each symbol may transmit information of log₂(4)=2 bits, which corresponds to 2-order modulation; therefore, the mapping relationship between a bit and a symbol may also be used to indicate a corresponding modulation order, and because the modulation order and the power information in the modulation parameter table 101 are obtained by the receive end through calculation according to a SNR of each subcarrier, adjustment performed at the transmit end according to the modulation order and the power information can improve system performance.

**Table 102**

| Subcarrier index | SNR |
|---|---|
| 1 | 25 |
| 2 | 24.6 |
| 3 | 23 |
| ... | ... |
| n | 10 |

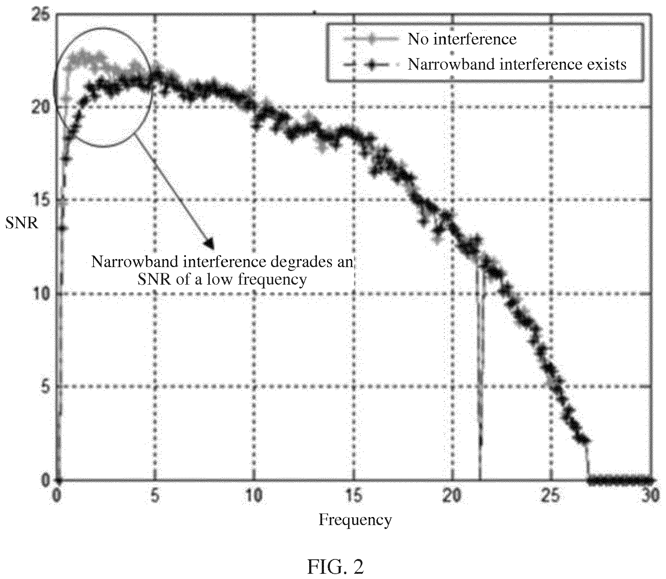

As shown in FIG. 2, when an optical OFDM system transmits data, an optical signal that transmits data is likely to deform due to interference of noise of a same frequency in a transmission channel, and when narrow-band interference occurs, an SNR of a subcarrier of a low frequency degrades, and this degradation causes degradation of system performance.

In a normal case, the optical signal sent by the transmit end includes a forward error correction (FEC) code, and the forward error correction code is known by the transmit end and the receive end. Therefore, the receive end may calculate a bit error rate (BER) of the optical OFDM system according to the received optical signal, where the BER is an important indicator for reflecting system performance, a higher BER indicates poorer system performance, and a lower BER indicates better system performance.

At present, in a data transmission process of the optical OFDM system, when the bit error rate is relatively high, or a quantity of subcarriers, on which SNR degradation occurs, in an optical signal sent by the transmit end is relatively large, system performance is severely affected. D1 "US6829307B1" discloses that " methods and devices for adaptively changing a parameter (such as sub-carrier bit allocation and/or gain) in a multi-carrier communication signal are described. In a method aspect, a unit that determines a need for a change sends an express change request to a second unit. The change request identifies one or more specific sub-carrier carrier to be altered and a desired value for the parameter to be changed for each identified sub-carrier. The requesting unit then monitors the communication signal it receives to determine whether the requested change has been implemented. The determination of whether the requested change has been implemented is based at least in part upon an analysis of a portion of the received communication signal that was intended to be changed. In another aspect of the invention, the change request command includes a header, a control field, at least one sub-carrier identifier, at least one desired parameter value indicator, and an error field. The header identifies the command as a change request command. The control field includes a tone count that indicates the number of tones to be altered. Each sub-carrier identifier identifies a specific sub-carrier to be altered and each desired parameter value indicator identifies a desired parameter value for its associated sub-carrier. The error field permits the unit receiving the change request to detect whether there is an error in its interpretation of the change request command".
D2 "Adaptive Loading Algorithms for IMDD Optical OFDM PON Systems Using Directly Modulated Lasers" (E. Giacoumidis, A. Kavatzikidis, A. Tsokanos, J. M. Tang, and I. Tomkos, Journal of Optical Communications and Networking Vol. 4, Issue 10, pp. 769-778 (2012)) discloses that "a detailed study on the effectiveness of three proposed optical orthogonal frequency-division multiplexing (OOFDM) adaptive loading algorithms (ALAs) is conducted, addressing, for the first time, a number of crucial issues related to OOFDM directly modulated laser-based intensity-modulated and direct-detected passive optical networks (PONs). The ALAs include the power loading (PL), bit loading, and bit-and-power loading (BPL) algorithms. It is shown that in comparison with the most sophisticated BPL algorithm, the simplest PL algorithm is effective in escalating a single-channel OOFDM PON performance to its maximum potential. On the other hand, for multi-channel OOFDM PON and when employing a large number of subcarriers and high digital-to-analog/analog-to-digital converter sampling speed, the BPL algorithm should be adopted. The utilization of the three ALAs can also extend the optimum clipping ratio range up to at least 3 dB compared to a conventional identical modulation scheme".
D3 "Experimental Demonstrations and Extensive Comparisons of End-to-End Real-Time Optical OFDM Transceivers With Adaptive Bit and/or Power Loading" (X. Q. Jin J. L. Wei R. P. Giddings T. Quinlan S. Walker J. M. Tang, IEEE Photonics Journal, Volume: 3, Issue: 3, June 2011, Page(s): 500 - 511) discloses that "experimental demonstrations are reported for end-to-end real-time optical orthogonal frequency division multiplexing (OOFDM) transceivers incorporating three widely adopted adaptive loading techniques, namely, power loading (PL), bit loading (BL), and bitand-power loading (BPL). In directly modulated distributed-feedback (DFB) laser-based, intensity-modulation, and direct-detection (IMDD) transmission systems consisting of up to 35-km single-mode fibers (SMFs), extensive experimental comparisons between these adaptive loading techniques are made in terms of maximum achievable signal bit rate, optical power budget, and digital signal processing (DSP) resource usage. It is shown that BPL is capable of supporting end-to-end real-time OOFDM transmission of 11.75 Gb/s over 25-km SMFs in the aforementioned systems at sampling speeds as low as 4 GS/s. In addition, experimental measurements also show that BPL (PL) offers the highest (lowest) signal bit rate, and their optical power budgets are similar. The observed signal bit rate difference between BPL and PL is almost independent of sampling speed and transmission distance. All the aforementioned key features agree very well with numerical simulations. On the other hand, BPL-consumed DSP resources are approximately three times higher than those required by PL. The results indicate that PL is a preferred choice for cost-effective OOFDM transceiver design".
D4 "GB2485415A" discloses a method to adaptively maximise the performance of high speed real time optical orthogonal frequency division multiplexing (OOFDM) transceivers by fully utilising available channel spectral characteristics.

### SUMMARY

Embodiments of the present invention provide a communication method, a transmit end, a receive end, and a system, where modulation order information and power information that correspond to a subcarrier, on which degradation occurs, in subcarriers of an optical transmit signal are adjusted by using a trimmer request message, thereby improving system performance.

A first aspect of the embodiments of the present invention provides a communication method, including:
when two of the following conditions are satisfied: a system bit error rate is lower than a preset threshold, and a quantity of subcarriers, on which SNR degradation occurs, in an optical signal exceeds a predetermined numerical range, determining, by a receive end according to an SNR of a to-be-adjusted subcarrier, modulation order information and power information that correspond to the to-be-adjusted subcarrier, where the to-be-adjusted subcarrier is at least one subcarrier in the subcarriers on which SNR degradation occurs;
sending, by the receive end, a trimmer request message to a transmit end, where the trimmer request message includes the modulation order information and the power information that correspond to the to-be-adjusted subcarrier;
receiving, by the receive end, an effective time point sent by the transmit end; wherein, the receiving, by the receive end, an effective time point sent by the transmit end comprises: receiving, by the receive end, a trimmer response message sent by the transmit end, wherein the trimmer response message comprises the effective time point; wherein, the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier; and
receiving, by the receive end, a subcarrier at the effective time point by using a demodulation order corresponding to the to-be-adjusted subcarrier, where the demodulation order corresponding to the to-be-adjusted subcarrier corresponds to a modulation order corresponding to the to-be-adjusted subcarrier.

With reference to the first aspect of the embodiments of the present invention, in a first possible implementation manner of the first aspect of the embodiments of the present invention,
the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

A second aspect of the embodiments of the present invention provides a communication method, including:
receiving, by a transmit end, a trimmer request message sent by a receive end, where the trimmer request message includes modulation order information and power information that correspond to a to-be-adjusted subcarrier in an optical signal;
determining, by the transmit end, an effective time point, and sending the effective time point to the receive end; wherein, the sending the effective time point to the receive end comprises: sending, by the transmit end, the trimmer response message to the receive end, wherein, the trimmer response message comprises the effective time point; wherein, the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier; and
performing, by the transmit end, modulation on and power allocation for the to-be-adjusted subcarrier according to the modulation order information and the power information that correspond to the to-be-adjusted subcarrier; and
sending, by the transmit end, a subcarrier after modulation and power allocation to the receive end at the effective time point.

With reference to the second aspect of the embodiments of the present invention, in a first possible implementation manner of the second aspect of the embodiments of the present invention,
the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

With reference to the second aspect of the embodiments of the present invention or the first possible implementation manner of the second aspect, in a second possible implementation manner of the second aspect of the embodiments of the present invention,
the determining, by the transmit end, an effective time point includes:
determining, by the transmit end, the effective time point according to a preset effective time point calculation rule, where
the preset effective time point calculation rule is:
determining a time point that is preset duration after a current moment of sending a trimmer response message as the effective time point, or determining, according to pre-acquired target duration required for current to-be-sent target data of the transmit end, a time point that is the target duration after a current moment of sending a trimmer response message as the effective time point.

A third aspect of the embodiments of the present invention provides a receive end, including:
a determining unit, configured to: when two of the following conditions are satisfied: a system bit error rate is lower than a preset threshold, and a quantity of subcarriers, on which SNR degradation occurs, in an optical signal exceeds a predetermined numerical range, determine, according to an SNR of a to-be-adjusted subcarrier, modulation order information and power information that correspond to the to-be-adjusted subcarrier, where the to-be-adjusted subcarrier is at least one subcarrier in the subcarriers on which SNR degradation occurs;
a sending unit, configured to send a trimmer request message to a transmit end, where the trimmer request message includes the modulation order information and the power information that correspond to the to-be-adjusted subcarrier; and
a receiving unit, configured to receive an effective time point sent by the transmit end, where the receiving unit is specifically configured to receive a trimmer response message sent by the transmit end, wherein the trimmer response message comprises the effective time point; wherein, the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier;
the receiving unit is further configured to receive a subcarrier at the effective time point by using a demodulation order corresponding to the to-be-adjusted subcarrier, where the demodulation order corresponding to the to-be-adjusted subcarrier corresponds to a modulation order corresponding to the to-be-adjusted subcarrier.

With reference to the third aspect of the embodiments of the present invention, in a first possible implementation manner of the third aspect of the embodiments of the present invention,
the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

A fourth aspect of the embodiments of the present invention provides a transmit end, including:
a receiving unit, configured to receive a trimmer request message sent by a receive end, where the trimmer request message includes modulation order information and power information that correspond to a to-be-adjusted subcarrier in an optical signal;
a determining unit, configured to determine an effective time point;
a sending unit, configured to send the effective time point determined by the determining unit to the receive end; wherein, the sending unit is specifically configured to send the trimmer response message to the receive end, wherein the trimmer response message comprises the effective time point; wherein the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier; and
a modulation and power allocation unit, configured to perform modulation on and power allocation for the to-be-adjusted subcarrier according to the modulation order information and the power information that correspond to the to-be-adjusted subcarrier, where
the sending unit is further configured to send a subcarrier after modulation and power allocation to the receive end at the effective time point.

With reference to the fourth aspect of the embodiments of the present invention, in a first possible implementation manner of the fourth aspect of the embodiments of the present invention,
the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

With reference to the fourth aspect of the embodiments of the present invention or the first possible implementation manner of the fourth aspect, in a second possible implementation manner of the fourth aspect of the embodiments of the present invention,
the determining unit is specifically configured to determine the effective time point according to a preset effective time point calculation rule, where
the preset effective time point calculation rule is:
determining a time point that is preset duration after a current moment of sending a trimmer response message as the effective time point, or determining, according to pre-acquired target duration required for current to-be-sent target data of the transmit end, a time point that is the target duration after a current moment of sending a trimmer response message as the effective time point.

A fifth aspect of the embodiments of the present invention provides an OFDM system, including a receive end and a transmit end, where
the receive end is the receive end according to any one of the third aspect, and the transmit end is the transmit end according to any one of the fourth aspect.

It can be seen from the foregoing technical solutions that the embodiments of the present invention have the following advantages:

In the embodiments of the present invention, in a case in which at least one of conditions that a system bit error rate is lower than a preset threshold, and a quantity of subcarriers, on which SNR degradation occurs, in an optical signal exceeds a predetermined numerical range is satisfied, a receive end sends a trimmer request message to a transmit end, where the trimmer request message includes modulation order information and power information that correspond to a to-be-adjusted subcarrier; the transmit end sends an effective time point to the receive end, performs modulation on and power allocation for the to-be-adjusted subcarrier at the effective time point according to the modulation order information and the power information that correspond to the to-be-adjusted subcarrier, and sends a subcarrier after modulation and power allocation to the receive end. In the embodiments of the present invention, because in the trimmer request message, the to-be-adjusted subcarrier is at least one subcarrier in the subcarriers on which SNR degradation occurs, and the modulation order information and the power information that correspond to an identifier of the to-be-adjusted subcarrier are obtained by the receive end through calculation according to an SNR of the to-be-adjusted subcarrier, modulation order information and power information that correspond to a subcarrier, on which degradation occurs, in subcarriers of an optical transmit signal are adjusted by using the trimmer request message, thereby improving system performance.

### BRIEF DESCRIPTION OF DRAWINGS

FIG. 1 is a schematic diagram of an embodiment of an optical OFDM system;
FIG. 2 is a schematic diagram of SNRs, obtained through calculation by using a detection wave, of subcarriers;
FIG. 3 is a schematic diagram of an embodiment of a communication method according to an embodiment of the present invention;
FIG. 3-1 is a schematic diagram of an embodiment of a trimmer request message according to an embodiment of the present invention;
FIG. 3-2 is a schematic diagram of an embodiment of a trimmer response message according to an embodiment of the present invention;
FIG. 4 is a schematic diagram of another embodiment of a communication method according to an embodiment of the present invention;
FIG. 5 is a schematic diagram of another embodiment of a communication method according to an embodiment of the present invention;
FIG. 6 is a schematic diagram of an embodiment of a transmit end according to an embodiment of the present invention;
FIG. 7 is a schematic diagram of another embodiment of a transmit end according to an embodiment of the present invention;
FIG. 8 is a schematic diagram of an embodiment of a receive end according to an embodiment of the present invention; and
FIG. 9 is a schematic diagram of another embodiment of a receive end according to an embodiment of the present invention.

### DESCRIPTION OF EMBODIMENTS

Embodiments of the present invention provide a communication method, a transmit end, a receive end, and a system, where modulation order information and power information that correspond to a subcarrier, on which degradation occurs, in subcarriers of an optical transmit signal are adjusted by using a trimmer request message, thereby improving system performance.

To make persons skilled in the art understand the technical solutions in the present invention better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

In the specification, claims, and accompanying drawings of the present invention, the terms "first", "second", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

To help to understand the embodiments of the present invention, several elements introduced in the description of the embodiments of the present invention are described herein first.

SNR is also referred to as signal-to-noise ratio and refers to a ratio of a signal to noise in an electronic device or an electronic system. The signal herein refers to an electronic signal that is from an external device and that needs to be processed by this device; the noise refers to an irregular extra signal (or information) that does not exist in an original signal obtained after processing of this device, and this signal does not change as the original signal changes.

Bit error rate (BER) is an index used to measure data transmission precision of data within a specified time. In a general case, a bit error rate = quantity of bit errors during transmission/total quantity of transmitted bits ^{∗} 100%.

Forward error correction is an error control manner, and refers to a technology that before a signal is sent to a transmission channel, the signal is coded in advance according to a particular algorithm and a redundant code having a feature of the signal is added; at a receive end, the received signal is decoded according to a corresponding algorithm, and an error code generated during transmission is found and corrected.

An embodiment of a communication method in the embodiments of the present invention is described below.

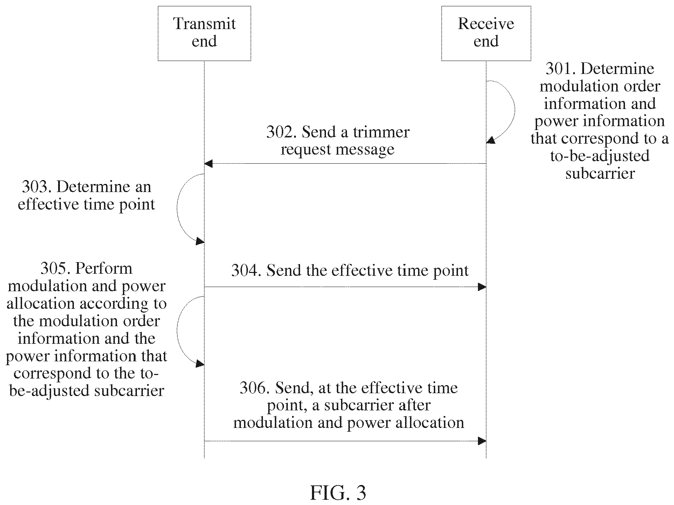

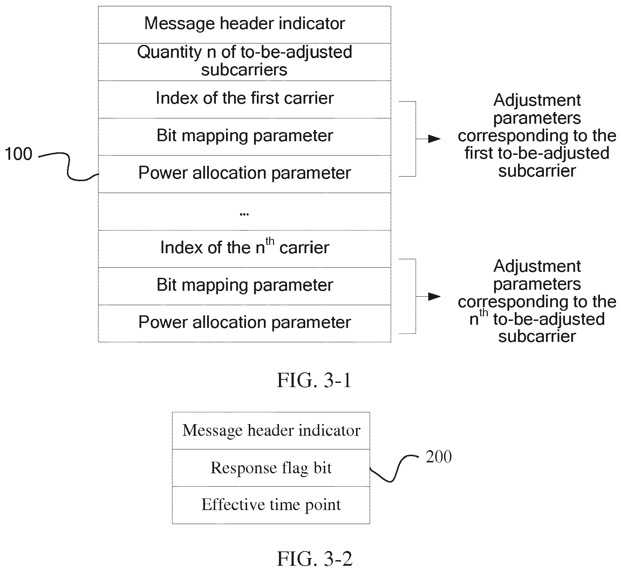

Referring to FIG. 3, an embodiment of a communication method in the embodiments of the present invention includes:

301: In a case in which at least one of conditions that a system bit error rate is lower than a preset threshold, and a quantity of subcarriers, on which SNR degradation occurs, in an optical signal exceeds a predetermined numerical range is satisfied, a receive end determines, according to an SNR of a to-be-adjusted subcarrier, modulation order information and power information that correspond to the to-be-adjusted subcarrier.

The to-be-adjusted subcarrier is at least one subcarrier in the subcarriers on which SNR degradation occurs.

In a normal case, an optical signal sent by a transmit end carries a preset detection wave and a forward error correction (FEC) code. The preset detection wave and the forward error correction code are known by the transmit end and the receive end, and the receive end may calculate a system bit error rate according to the forward error correction code in the received optical signal.

Meanwhile, the receive end may detect SNRs of subcarriers in the received optical signal according the preset detection wave, and the receive end re-calculates modulation order information and power information of each subcarrier according to the obtained SNR of each subcarrier. In this embodiment, in a case in which at least one of the conditions that a system bit error rate is lower than a preset threshold, and a quantity of subcarriers, on which SNR degradation occurs, in an optical signal exceeds a predetermined numerical range is satisfied, the receive end determines, according to the SNR of the to-be-adjusted subcarrier, the modulation order information and the power information that correspond to the to-be-adjusted subcarrier, where the to-be-adjusted subcarrier is at least one subcarrier in the subcarriers on which SNR degradation occurs. It should be noted that, the subcarrier mentioned in this embodiment of the present invention is a subcarrier in an optical signal sent by the transmit end to the receive end.

302: The receive end sends a trimmer request message to a transmit end.

In a case in which at least one of the conditions that a system bit error rate is lower than a preset threshold, and a quantity of subcarriers, on which SNR degradation occurs, in an optical signal exceeds a predetermined numerical range is satisfied, the receive end sends the trimmer request message to the transmit end, and the receive end receives the trimmer response message sent by the transmit end, where the trimmer request message includes the modulation order information and the power information that correspond to the to-be-adjusted subcarrier.

Specifically, the trimmer request message may include a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier, for example, the correspondence between a bit and a symbol is that each symbol corresponds to information of 2 bits, that is, corresponds to 2-order modulation; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

An embodiment of the trimmer request message in this embodiment of the present invention is shown in FIG. 3-1, where a trimmer request message 100 may include a quantity n of to-be-adjusted subcarriers and an adjustment parameter corresponding to each to-be-adjusted subcarrier. Specifically, the trimmer request message includes a subcarrier index of the to-be-adjusted subcarrier, and modulation order information and power information that correspond to the subcarrier index of the to-be-adjusted subcarrier;
the modulation order information and the power information that correspond to the subcarrier index of the to-be-adjusted subcarrier include a bit mapping parameter and a power allocation parameter; and
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

303: The transmit end determines an effective time point.

After receiving the foregoing trimmer request message sent by the receive end, the transmit end determines the effective time point, and sends the effective time point to the receive end. The receive end receives the effective time point sent by the transmit end.

The effective time point may be determined by the transmit end according to a preset effective time point calculation rule. The preset effective time point calculation rule may be: determining a time point that is preset duration after a current moment of sending a trimmer response message as the effective time point. For example, the preset duration is 10 minutes, the effective time point is a time point 10 minutes after the current moment of sending the trimmer response message. The preset effective time point calculation rule may also be: determining, according to pre-acquired target duration required for current to-be-sent target data of the transmit end, a time point that is the target duration after a current moment of sending a trimmer response message as the effective time point. For example, the transmit end sends one part of a set of data to the receive end, and the other part of the target data is not sent; the transmit end may determine, according to a size of the target data, duration required for the current to-be-sent target data, and therefore may determine a time point at which transmission of the target data is completed as the effective time point. In this way, the transmit end adjusts the modulation order information and the power information after the set of data is transmitted, which can avoid interruption of data transmission.

304: The transmit end sends the effective time point to the receive end.

Correspondingly, the receive end receives the effective time point sent by the transmit end.

The sending the effective time point to the receive end may include: sending, by the transmit end, the trimmer response message to the receive end, where the trimmer response message includes the effective time point. In this case, the receiving, by the receive end, the effective time point sent by the transmit end includes: receiving, by the receive end, the trimmer response message sent by the transmit end.

In some embodiments of the present invention, the trimmer response message may include a message header indicator and the effective time point, where the message header indicator is used to indicate that a current message is the trimmer response message.

As shown in FIG. 3-2, in some other embodiments of the present invention, in addition to a message header indicator and an effective time point, a trimmer response message 200 may further include a response flag bit, and the response flag bit is used to indicate whether the transmit end performs modulation on and power allocation for the to-be-adjusted subcarrier according to the modulation order information and the power information that correspond to the to-be-adjusted subcarrier.

The response flag bit may be fixedly a numerical value (such as 1) to indicate that trimming is to be performed. For example, when the response flag bit is fixedly 1, it fixedly indicates that trimming is to be performed. In some other embodiments of the present invention, the response flag bit may not be fixed, for example, it is set that when the response flag bit is 0, the transmit end is instructed not to perform modulation on and power allocation for the to-be-adjusted subcarrier according to the modulation order information and the power information that correspond to the to-be-adjusted subcarrier, and when the response flag bit is 1, the transmit end is instructed to perform modulation on and power allocation for the to-be-adjusted subcarrier according to the modulation order information and the power information that correspond to the to-be-adjusted subcarrier.

305: The transmit end performs modulation on and power allocation for the to-be-adjusted subcarrier according to the modulation order information and the power information that correspond to the to-be-adjusted subcarrier.

When the transmit end performs modulation on and power allocation for a subcarrier in an optical transmit signal, there are corresponding modulation order information and power information; therefore, the transmit end may perform modulation on and power allocation for the to-be-adjusted subcarrier according to the modulation order information and the power information that correspond to the to-be-adjusted subcarrier, and previous modulation order information and power information may be remained for modulation order information and power information that correspond to other subcarriers in the optical transmit signal.

306: The transmit end sends a subcarrier after modulation and power allocation to the receive end at the effective time point.

After receiving the effective time point sent by the transmit end, the receive end receives the subcarrier by using a demodulation order corresponding to the to-be-adjusted subcarrier, where the demodulation order corresponding to the to-be-adjusted subcarrier corresponds to a modulation order corresponding to the to-be-adjusted subcarrier.

In this embodiment of the present invention, in a case in which at least one of conditions that a system bit error rate is lower than a preset threshold, and a quantity of subcarriers, on which SNR degradation occurs, in an optical signal exceeds a predetermined numerical range is satisfied, a receive end sends a trimmer request message to a transmit end, where the trimmer request message includes modulation order information and power information that correspond to a to-be-adjusted subcarrier; the transmit end sends an effective time point to the receive end, performs modulation on and power allocation for the to-be-adjusted subcarrier at the effective time point according to the modulation order information and the power information that correspond to the to-be-adjusted subcarrier, and sends a subcarrier after modulation and power allocation to the receive end. In this embodiment of the present invention, because in the trimmer request message, the to-be-adjusted subcarrier is at least one subcarrier in the subcarriers on which SNR degradation occurs, and the modulation order information and the power information that correspond to an identifier of the to-be-adjusted subcarrier are obtained by the receive end through calculation according to an SNR of the to-be-adjusted subcarrier, modulation order information and power information that correspond to a subcarrier, on which degradation occurs, in subcarriers of an optical transmit signal are adjusted by using the trimmer request message, thereby improving system performance.

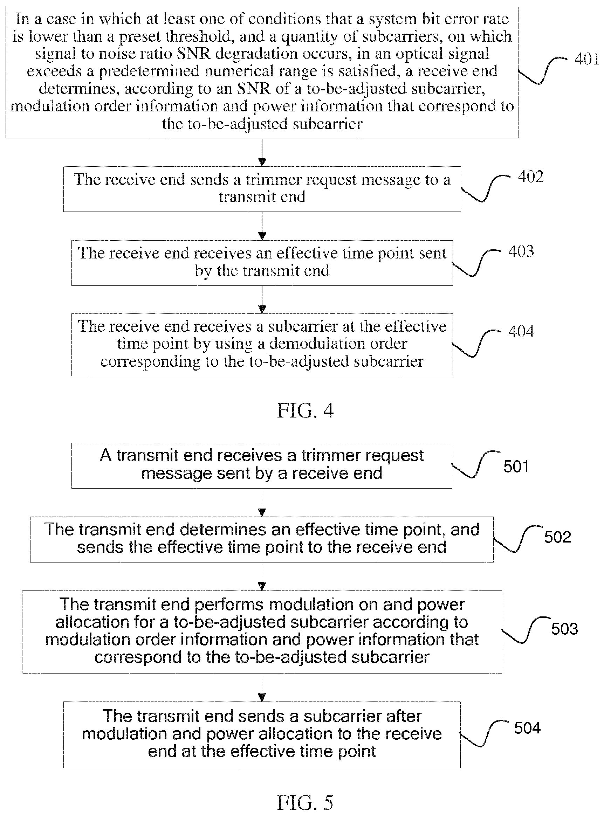

The embodiment of the method of communication through interaction between a receive end and a transmit end is described above, and an embodiment of a communication method on a receive end side is described below. Referring to FIG. 4, another embodiment of a communication method of an embodiment of the present invention includes:

401: In a case in which at least one of conditions that a system bit error rate is lower than a preset threshold, and a quantity of subcarriers, on which SNR degradation occurs, in an optical signal exceeds a predetermined numerical range is satisfied, a receive end determines, according to an SNR of a to-be-adjusted subcarrier, modulation order information and power information that correspond to the to-be-adjusted subcarrier.

The to-be-adjusted subcarrier is at least one subcarrier in the subcarriers on which SNR degradation occurs.

402: The receive end sends a trimmer request message to a transmit end.

The trimmer request message includes the modulation order information and the power information that correspond to the to-be-adjusted subcarrier. For the trimmer request message, reference may be made to descriptions of the trimmer request message in the embodiment shown in FIG. 3, and details are not described herein again.

403: The receive end receives an effective time point sent by the transmit end.

The effective time point may be determined by the transmit end according to a preset effective time point calculation rule. For the preset effective time point calculation rule, reference may also be made to the embodiment shown in FIG. 3, and details are not described herein again.

404: The receive end receives a subcarrier at the effective time point by using a demodulation order corresponding to the to-be-adjusted subcarrier.

The demodulation order corresponding to the to-be-adjusted subcarrier corresponds to a modulation order corresponding to the to-be-adjusted subcarrier.

In this embodiment of the present invention, in a case in which at least one of conditions that a system bit error rate is lower than a preset threshold, and a quantity of subcarriers, on which SNR degradation occurs, in an optical signal exceeds a predetermined numerical range is satisfied, a receive end determines, according to an SNR of a to-be-adjusted subcarrier, modulation order information and power information that correspond to the to-be-adjusted subcarrier, and sends a trimmer request message to a transmit end, where the trimmer request message includes the modulation order information and the power information that correspond to the to-be-adjusted subcarrier; the receive end receives an effective time point sent by the transmit end, and receives a subcarrier at the effective time point by using a demodulation order corresponding to the to-be-adjusted subcarrier. In this embodiment of the present invention, because in the trimmer request message, the to-be-adjusted subcarrier is at least one subcarrier in the subcarriers on which SNR degradation occurs, and the modulation order information and the power information that correspond to an identifier of the to-be-adjusted subcarrier are obtained by the receive end through calculation according to an SNR of the to-be-adjusted subcarrier, modulation order information and power information that correspond to a subcarrier, on which degradation occurs, in subcarriers of an optical transmit signal are adjusted by using the trimmer request message, thereby improving system performance.

An embodiment of a communication method on a transmit end side is described below. Referring to FIG. 5, another embodiment of a communication method of an embodiment of the present invention includes:
501: A transmit end receives a trimmer request message sent by a receive end.

The trimmer request message includes modulation order information and power information that correspond to a to-be-adjusted subcarrier. For the trimmer request message, reference may be made to descriptions of the trimmer request message in the embodiment shown in FIG. 3, and details are not described herein again.

502: The transmit end determines an effective time point, and sends the effective time point to the receive end.

In this embodiment, the determining, by the transmit end, an effective time point may include:
determining, by the transmit end, the effective time point according to a preset effective time point calculation rule.

For the preset effective time point calculation rule, reference may be made to the embodiment shown in FIG. 3, and details are not described herein again.

In some embodiments of the present invention, the sending the effective time point to the receive end may include: sending, by the transmit end, a trimmer response message to the receive end, where the trimmer response message includes the effective time point.

For the trimmer response message, reference may also be made to the embodiment shown in FIG. 3, and details are not described herein again.
503: The transmit end performs modulation on and power allocation for a to-be-adjusted subcarrier according to the modulation order information and the power information that correspond to the to-be-adjusted subcarrier.
504: The transmit end sends a subcarrier after modulation and power allocation to the receive end at the effective time point.

In this embodiment of the present invention, a transmit end receives a trimmer request message sent by a receive end, where the trimmer request message includes modulation order information and power information that correspond to a to-be-adjusted subcarrier; the transmit end sends an effective time point to the receive end, performs modulation on and power allocation for the to-be-adjusted subcarrier at the effective time point according to the modulation order information and the power information that correspond to the to-be-adjusted subcarrier, and sends a subcarrier after modulation and power allocation to the receive end. In this embodiment of the present invention, because in the trimmer request message, the to-be-adjusted subcarrier is at least one subcarrier in subcarriers on which SNR degradation occurs, and the modulation order information and the power information that correspond to an identifier of the to-be-adjusted subcarrier are obtained by the receive end through calculation according to an SNR of the to-be-adjusted subcarrier, modulation order information and power information that correspond to a subcarrier, on which degradation occurs, in subcarriers of an optical transmit signal are adjusted by using the trimmer request message, thereby improving system performance.

An embodiment of a receive end in the embodiments of the present invention is described below.

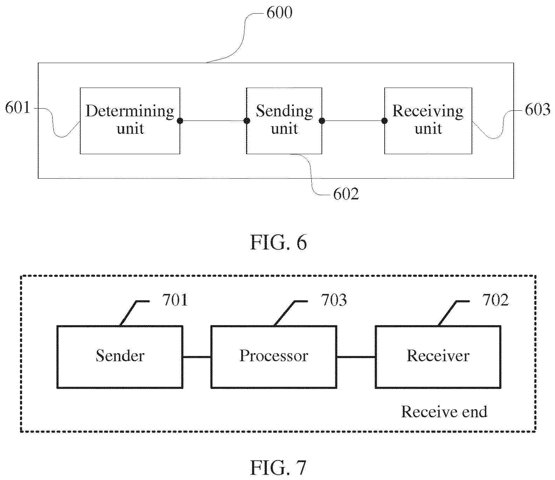

Referring to FIG. 6, an embodiment of a receive end 600 in the embodiments of the present invention includes:
a determining unit 601, configured to: in a case in which at least one of conditions that a system bit error rate is lower than a preset threshold, and a quantity of subcarriers, on which SNR degradation occurs, in an optical signal exceeds a predetermined numerical range is satisfied, determine, according to an SNR of a to-be-adjusted subcarrier, modulation order information and power information that correspond to the to-be-adjusted subcarrier, where the to-be-adjusted subcarrier is at least one subcarrier in the subcarriers on which SNR degradation occurs;
a sending unit 602, configured to send a trimmer request message to a transmit end, where the trimmer request message includes the modulation order information and the power information that correspond to the to-be-adjusted subcarrier; and
a receiving unit 603, configured to receive an effective time point sent by the transmit end, where
the receiving unit 603 is further configured to receive a subcarrier at the effective time point by using a demodulation order corresponding to the to-be-adjusted subcarrier, where the demodulation order corresponding to the to-be-adjusted subcarrier corresponds to a modulation order corresponding to the to-be-adjusted subcarrier.

In this embodiment of the present invention, in a case in which at least one of conditions that a system bit error rate is lower than a preset threshold, and a quantity of subcarriers, on which SNR degradation occurs, in an optical signal exceeds a predetermined numerical range is satisfied, the determining unit 601 determines, according to an SNR of a to-be-adjusted subcarrier, modulation order information and power information that correspond to the to-be-adjusted subcarrier, the sending unit 602 sends a trimmer request message to a transmit end, where the trimmer request message includes the modulation order information and the power information that correspond to the to-be-adjusted subcarrier, and the receiving unit 603 receives an effective time point sent by the transmit end, and receives a subcarrier at the effective time point by using a demodulation order corresponding to the to-be-adjusted subcarrier. In this embodiment of the present invention, because in the trimmer request message, the to-be-adjusted subcarrier is at least one subcarrier in the subcarriers on which SNR degradation occurs, and the modulation order information and the power information that correspond to an identifier of the to-be-adjusted subcarrier are obtained by the receive end through calculation according to an SNR of the to-be-adjusted subcarrier, modulation order information and power information that correspond to a subcarrier, on which degradation occurs, in subcarriers of an optical transmit signal are adjusted by using the trimmer request message, thereby improving system performance.

In some embodiments of the present invention, the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

In some embodiments of the present invention, the receiving unit is specifically configured to receive a trimmer response message sent by the transmit end, where the trimmer response message includes the effective time point.

In some embodiments of the present invention, the trimmer response message further includes a response flag bit, and the response flag bit is used to indicate whether the transmit end performs modulation on and power allocation for the to-be-adjusted subcarrier according to the modulation order information and the power information that correspond to the to-be-adjusted subcarrier.

The receive end of the embodiments of the present invention is described above from the perspective of a unit functional entity, and the receive end of the embodiments of the present invention is described below from the perspective of hardware processing. Referring to FIG. 7, a receive end of an embodiment of the present invention includes: a sender 701, a receiver 702, and a processor 703 (there may be one or more senders 701, receivers 702, and processors 703).

The receive end involved in this embodiment of the present invention may include more or less components than those shown in FIG. 7, two or more components may be combined, or configuration or setting of the components may be different, and the components may be implemented in hardware, software, or a combination of hardware or software that includes one or more signal-processing and/or application-specific integrated circuits.

The processor 703 is configured to perform the following operation:
in a case in which at least one of conditions that a system bit error rate is lower than a preset threshold, and a quantity of subcarriers, on which SNR degradation occurs, in an optical signal exceeds a predetermined numerical range is satisfied, determining, according to an SNR of a to-be-adjusted subcarrier, modulation order information and power information that correspond to the to-be-adjusted subcarrier, where the to-be-adjusted subcarrier is at least one subcarrier in the subcarriers on which SNR degradation occurs.

The sender 701 is configured to perform the following operation:
sending a trimmer request message to a transmit end, where the trimmer request message includes the modulation order information and the power information that correspond to the to-be-adjusted subcarrier.

The receiver 702 is configured to perform the following operations:
receiving an effective time point sent by the transmit end; and
receiving a subcarrier at the effective time point by using a demodulation order corresponding to the to-be-adjusted subcarrier, where the demodulation order corresponding to the to-be-adjusted subcarrier corresponds to a modulation order corresponding to the to-be-adjusted subcarrier.

In some embodiments of the present invention, the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

In some embodiments of the present invention, the receiver is specifically configured to perform the following operation:
receiving a trimmer response message sent by the transmit end, where the trimmer response message includes the effective time point.

In some embodiments of the present invention, the trimmer response message further includes a response flag bit, and the response flag bit is used to indicate whether the transmit end performs modulation on and power allocation for the to-be-adjusted subcarrier according to the modulation order information and the power information that correspond to the to-be-adjusted subcarrier.

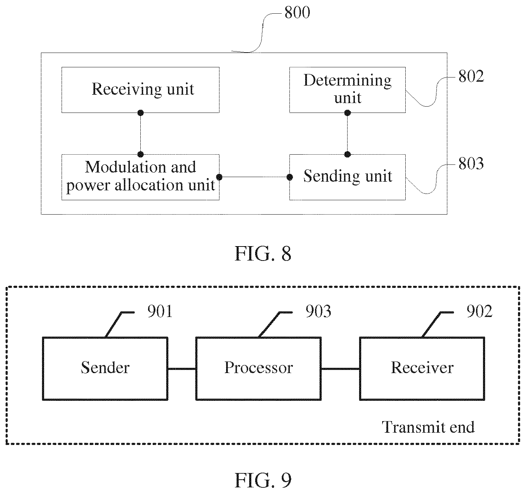

An embodiment of a transmit end in the embodiments of the present invention is described below. Referring to FIG. 8, an embodiment of a transmit end 800 in the embodiments of the present invention includes:
a receiving unit 801, configured to receive a trimmer request message sent by a receive end, where the trimmer request message includes modulation order information and power information that correspond to a to-be-adjusted subcarrier;
a determining unit 802, configured to determine an effective time point;
a sending unit 803, configured to send the effective time point determined by the determining unit to the receive end; and
a modulation and power allocation unit 804, configured to perform modulation on and power allocation for the to-be-adjusted subcarrier according to the modulation order information and the power information that correspond to the to-be-adjusted subcarrier, where
the sending unit 803 is further configured to send a subcarrier after modulation and power allocation to the receive end at the effective time point.

In this embodiment of the present invention, the receiving unit 801 receives a trimmer request message sent by a receive end, where the trimmer request message includes modulation order information and power information that correspond to a to-be-adjusted subcarrier; the determining unit 802 determines an effective time point; the sending unit 803 sends the effective time point to the receive end; the modulation and power allocation unit 804 performs modulation on and power allocation for the to-be-adjusted subcarrier at the effective time point according to the modulation order information and the power information that correspond to the to-be-adjusted subcarrier; and the sending unit 803 sends a subcarrier after modulation and power allocation to the receive end. In this embodiment of the present invention, because in the trimmer request message, the to-be-adjusted subcarrier is at least one subcarrier in subcarriers on which SNR degradation occurs, and the modulation order information and the power information that correspond to an identifier of the to-be-adjusted subcarrier are obtained by the receive end through calculation according to an SNR of the to-be-adjusted subcarrier, modulation order information and power information that correspond to a subcarrier, on which degradation occurs, in subcarriers of an optical transmit signal are adjusted by using the trimmer request message, thereby improving system performance.

In some embodiments of the present invention, the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

In some embodiments of the present invention, the determining unit 802 is specifically configured to determine the effective time point according to a preset effective time point calculation rule, where
the preset effective time point calculation rule is:
determining a time point that is preset duration after a current moment of sending a trimmer response message as the effective time point, or determining, according to pre-acquired target duration required for current to-be-sent target data of the transmit end, a time point that is the target duration after a current moment of sending a trimmer response message as the effective time point.

In some embodiments of the present invention, the sending unit 803 is specifically configured to send the trimmer response message to the receive end, where the trimmer response message includes the effective time point.

In some embodiments of the present invention, the trimmer response message further includes a response flag bit, and the response flag bit is used to indicate whether the transmit end performs modulation on and power allocation for the to-be-adjusted subcarrier according to the modulation order information and the power information that correspond to the to-be-adjusted subcarrier.

The transmit end of the embodiments of the present invention is described above from the perspective of a unit functional entity, and the transmit end of the embodiments of the present invention is described below from the perspective of hardware processing. Referring to FIG. 9, a transmit end of an embodiment of the present invention includes: a sender 901, a receiver 902, and a processor 903 (there may be one or more senders 901, receivers 902, and processors 903).

The transmit end involved in this embodiment of the present invention may include more or less components than those shown in FIG. 9, two or more components may be combined, or configuration or setting of the components may be different, and the components may be implemented in hardware, software, or a combination of hardware or software that includes one or more signal-processing and/or application-specific integrated circuits.

The receiver 902 is configured to perform the following operation:
receiving a trimmer request message sent by a receive end, where the trimmer request message includes modulation order information and power information that correspond to a to-be-adjusted subcarrier.

The processor 903 is configured to perform the following operation:
determining an effective time point.

The sender 901 is configured to perform the following operation:
sending the effective time point to the receive end.

The processor 903 is further configured to perform the following operation:
performing modulation on and power allocation for the to-be-adjusted subcarrier according to the modulation order information and the power information that correspond to the to-be-adjusted subcarrier.

The sender 901 is further configured to perform the following operation:
sending a subcarrier after modulation and power allocation to the receive end at the effective time point.

In some embodiments of the present invention, the trimmer request message includes a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier include a bit mapping parameter and a power allocation parameter, where
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

In some embodiments of the present invention, the processor 903 is specifically configured to perform the following operation:
determining the effective time point according to a preset effective time point calculation rule, where
the preset effective time point calculation rule is:
determining a time point that is preset duration after a current moment of sending a trimmer response message as the effective time point, or determining, according to pre-acquired target duration required for current to-be-sent target data of the transmit end, a time point that is the target duration after a current moment of sending a trimmer response message as the effective time point.

In some embodiments of the present invention, the sender 903 is specifically configured to perform the following operation:
sending the trimmer response message to the receive end, where the trimmer response message includes the effective time point.

In some embodiments of the present invention, the trimmer response message further includes a response flag bit, and the response flag bit is used to indicate whether the transmit end performs modulation on and power allocation for the to-be-adjusted subcarrier according to the modulation order information and the power information that correspond to the to-be-adjusted subcarrier.

An embodiment of the present invention further provides an OFDM system, which includes a receive end and a transmit end, where the transmit end is the transmit end described in any one of the foregoing embodiments, and the receive end is the receive end described in any one of the foregoing embodiments.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the invention as defined by the appended claims.

## Claims

1. A communication method, **characterized by**, comprising:
when two of the following conditions are satisfied: a system bit error rate is lower than a preset threshold, and a quantity of subcarriers, on which signal to noise ratio, SNR, degradation occurs, in an optical signal exceeds a predetermined numerical range, determining (401), by a receive end according to an SNR of a to-be-adjusted subcarrier, modulation order information and power information that correspond to the to-be-adjusted subcarrier, wherein the to-be-adjusted subcarrier is at least one subcarrier in the subcarriers on which SNR degradation occurs;
sending (402), by the receive end, a trimmer request message to a transmit end, wherein the trimmer request message comprises the modulation order information and the power information that correspond to the to-be-adjusted subcarrier;
receiving (403), by the receive end, an effective time point sent by the transmit end; wherein, the receiving, by the receive end, an effective time point sent by the transmit end comprises: receiving, by the receive end, a trimmer response message sent by the transmit end, wherein the trimmer response message comprises the effective time point; wherein, the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier; and
receiving (404), by the receive end, a subcarrier at the effective time point by using a demodulation order corresponding to the to-be-adjusted subcarrier, wherein the demodulation order corresponding to the to-be-adjusted subcarrier corresponds to a modulation order corresponding to the to-be-adjusted subcarrier.

2. The method according to claim 1, wherein
the trimmer request message comprises a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier comprise a bit mapping parameter and a power allocation parameter, wherein
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

3. A communication method, **characterized by**, comprising:
receiving (501), by a transmit end, a trimmer request message sent by a receive end, wherein the trimmer request message comprises modulation order information and power information that correspond to a to-be-adjusted subcarrier in an optical signal;
determining (502), by the transmit end, an effective time point, and sending the effective time point to the receive end; wherein, the sending the effective time point to the receive end comprises: sending, by the transmit end, the trimmer response message to the receive end, wherein, the trimmer response message comprises the effective time point; wherein, the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier; and
performing (503), by the transmit end, modulation on and power allocation for the to-be-adjusted subcarrier according to the modulation order information and the power information that correspond to the to-be-adjusted subcarrier; and
sending (504), by the transmit end, a subcarrier after modulation and power allocation to the receive end at the effective time point.

4. The method according to claim 3, wherein
the trimmer request message comprises a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier comprise a bit mapping parameter and a power allocation parameter, wherein
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

5. The method according to claim 3 or 4, wherein the determining, by the transmit end, an effective time point comprises:
determining, by the transmit end, the effective time point according to a preset effective time point calculation rule, wherein
the preset effective time point calculation rule is:
determining a time point that is preset duration after a current moment of sending a trimmer response message as the effective time point, or determining, according to pre-acquired target duration required for current to-be-sent target data of the transmit end, a time point that is the target duration after a current moment of sending a trimmer response message as the effective time point.

6. A receive end (600), **characterized by**, comprising:
a determining unit (601), configured to: when two of the following conditions are satisfied: a system bit error rate is lower than a preset threshold, and a quantity of subcarriers, on which signal to noise ratio, SNR, degradation occurs, in an optical signal exceeds a predetermined numerical range, determine, according to an SNR of a to-be-adjusted subcarrier, modulation order information and power information that correspond to the to-be-adjusted subcarrier, wherein the to-be-adjusted subcarrier is at least one subcarrier in the subcarriers on which SNR degradation occurs;
a sending unit (602), configured to send a trimmer request message to a transmit end, wherein the trimmer request message comprises the modulation order information and the power information that correspond to the to-be-adjusted subcarrier; and
a receiving unit (603), configured to receive an effective time point sent by the transmit end, wherein, the receiving unit is specifically configured to receive a trimmer response message sent by the transmit end, wherein the trimmer response message comprises the effective time point; wherein, the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier;
the receiving unit (603) is further configured to receive a subcarrier at the effective time point by using a demodulation order corresponding to the to-be-adjusted subcarrier, wherein the demodulation order corresponding to the to-be-adjusted subcarrier corresponds to a modulation order corresponding to the to-be-adjusted subcarrier.

7. The receive end according to claim 6, wherein
the trimmer request message comprises a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier comprise a bit mapping parameter and a power allocation parameter, wherein
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

8. A transmit end (800), **characterized by**, comprising:
a receiving unit (801), configured to receive a trimmer request message sent by a receive end, wherein the trimmer request message comprises modulation order information and power information that correspond to a to-be-adjusted subcarrier in an optical signal;
a determining unit (802), configured to determine an effective time point;
a sending unit (803), configured to send the effective time point determined by the determining unit to the receive end; wherein, the sending unit is specifically configured to send the trimmer response message to the receive end, wherein the trimmer response message comprises the effective time point; wherein the trimmer response message further comprises a response flag bit, and the response flag bit is used to indicate whether the transmit end performs modulation on and power allocation for the to-be-adjusted subcarrier according to the modulation order information and the power information that correspond to the to-be-adjusted subcarrier; and
a modulation and power allocation unit(804), configured to perform modulation on and power allocation for the to-be-adjusted subcarrier according to the modulation order information and the power information that correspond to the to-be-adjusted subcarrier, wherein
the sending unit (803) is further configured to send a subcarrier after modulation and power allocation to the receive end at the effective time point.

9. The transmit end according to claim 8, wherein
the trimmer request message comprises a subcarrier index of the to-be-adjusted subcarrier, and modulation order information and power information that correspond to the subcarrier index of the to-be-adjusted subcarrier; and
the modulation order information and the power information that correspond to the subcarrier index of the to-be-adjusted subcarrier comprise a bit mapping parameter and a power allocation parameter, wherein
the subcarrier index is used to indicate a current to-be-adjusted subcarrier; the bit mapping parameter is a correspondence between a bit and a symbol, and is used to indicate a modulation order corresponding to the current to-be-adjusted subcarrier; and the power allocation parameter is used to indicate power information used by the current to-be-adjusted subcarrier, and the power information is transmit power of the current to-be-adjusted subcarrier after adjustment, or a ratio of transmit power of the current to-be-adjusted subcarrier after adjustment to preset total transmit power.

10. The transmit end according to claim 8 or 9, wherein
the determining unit is specifically configured to determine the effective time point according to a preset effective time point calculation rule, wherein
the preset effective time point calculation rule is:
determining a time point that is preset duration after a current moment of sending a trimmer response message as the effective time point, or determining, according to pre-acquired target duration required for current to-be-sent target data of the transmit end, a time point that is the target duration after a current moment of sending a trimmer response message as the effective time point.

11. An optical orthogonal frequency division multiplexing, OFDM, system, **characterized by**, comprising a receive end and a transmit end, wherein the receive end is the receive end according to claim 6 or 7, and the transmit end is the transmit end according to any one of claims 8 to 10.

## Patentansprüche

1. Kommunikationsverfahren, **dadurch gekennzeichnet, dass** es umfasst:
wenn zwei der folgenden Bedingungen erfüllt werden: eine Systembitfehlerrate ist niedriger als ein voreingestellter Schwellenwert und eine Anzahl von Unterträgern, auf denen eine Signal-Rausch-Verhältnis-Verschlechterung (Signal to Noise Ratio degradation, SNR-Verschlechterung) in einem optischen Signal auftritt, überschreitet einen vorbestimmten numerischen Bereich, Ermitteln (401), durch ein Empfangsende gemäß einem SNR eines anzupassenden Unterträgers, von Modulationsbefehlsinformationen und von Leistungsinformationen, die dem anzupassenden Unterträger entsprechen, wobei der anzupassende Unterträger mindestens ein Unterträger aus den Unterträgern ist, auf denen eine Signal-Rausch-Verhältnis-Verschlechterung auftritt;
Senden (402) einer Trimmeranforderungsnachricht von dem Empfangsende an ein Sendende, wobei die Trimmeranforderungsnachricht die Modulationsbefehlsinformationen und die Leistungsinformationen umfasst, die dem anzupassenden Unterträger entsprechen;
Empfangen (403) in dem Empfangsende eines effektiven Zeitpunkts, der von dem Sendende gesendet wird; wobei das Empfangen in dem Empfangsende eines effektiven Zeitpunkts, der von dem Sendende gesendet wird, umfasst: Empfangen in dem Empfangsende einer Trimmerantwortnachricht, die von dem Sendende gesendet wird, wobei die Trimmerantwortnachricht den effektiven Zeitpunkt umfasst; wobei die Trimmerantwortnachricht außerdem ein Antwortkennzeichenbit umfasst, und wobei das Antwortkennzeichenbit verwendet wird, um anzuzeigen, ob das Sendeende eine Modulation an dem, und eine Leistungszuteilung für den, anzupassenden Unterträger gemäß den Modulationsbefehlsinformationen und den Leistungsinformationen ausführt, die dem anzupassenden Unterträger entsprechen; und
Empfangen (404) eines Unterträgers zu dem effektiven Zeitpunkt in dem Empfangsende, indem ein Demodulationsbefehl verwendet wird, der dem anzupassenden Unterträger entspricht, wobei der Demodulationsbefehl, der dem anzupassenden Unterträger entspricht, einem Modulationsbefehl entspricht, der dem anzupassenden Unterträger entspricht.

2. Verfahren nach Anspruch 1, wobei
die Trimmeranforderungsnachricht einen Unterträgerindex des anzupassenden Unterträgers und Modulationsbefehlsinformationen und Leistungsinformationen umfasst, die dem Unterträgerindex des anzupassenden Unterträgers entsprechen; und
die Modulationsbefehlsinformationen und die Leistungsinformationen, die dem Unterträgerindex des anzupassenden Unterträgers entsprechen, einen Bitabbildungsparameter und einen Leistungszuteilungsparameter umfassen, wobei
der Unterträgerindex verwendet wird, um einen aktuell anzupassenden Unterträger anzuzeigen; der Bitabbildungsparameter eine Übereinstimmung zwischen einem Bit und einem Symbol ist und verwendet wird, um einen Modulationsbefehl anzuzeigen, der dem aktuell anzupassenden Unterträger entspricht; und wobei der Leistungszuteilungsparameter verwendet wird, um Leistungsinformationen anzuzeigen, die von dem aktuell anzupassenden Unterträger verwendet werden, und wobei die Leistungsinformationen eine Sendeleistung des aktuell anzupassenden Unterträgers nach der Anpassung sind, oder ein Verhältnis der Sendeleistung des aktuell anzupassenden Unterträgers nach der Anpassung sind, um eine gesamte Sendeleistung voreinzustellen.

3. Kommunikationsverfahren, **dadurch gekennzeichnet, dass** es umfasst:
Empfangen (501) in einem Sendeende einer Trimmeranforderungsnachricht, die von dem Empfangsende gesendet wird, wobei die Trimmeranforderungsnachricht Modulationsbefehlsinformationen und Leistungsinformationen umfasst, die dem anzupassenden Unterträger in einem optischen Signal entsprechen;
Ermitteln (502), durch das Sendeende, eines effektiven Zeitpunkts und Senden des effektiven Zeitpunkts an das Empfangsende; wobei das Senden des effektiven Zeitpunkts an das Empfangsende umfasst: Senden der Trimmerantwortnachricht von dem Sendende an das Empfangsende, wobei die Trimmerantwortnachricht den effektiven Zeitpunkt umfasst; wobei die Trimmerantwortnachricht außerdem ein Antwortkennzeichenbit umfasst, und wobei das Antwortkennzeichenbit verwendet wird, um anzuzeigen, ob das Sendeende eine Modulation an dem, und eine Leistungszuteilung für den, anzupassenden Unterträger gemäß den Modulationsbefehlsinformationen und den Leistungsinformationen ausführt, die dem anzupassenden Unterträger entsprechen; und
Ausführen (503), durch das Sendeende, einer Modulation an dem, und einer Leistungszuteilung für den, anzupassenden Unterträger gemäß den Modulationsbefehlsinformationen und den Leistungsinformationen, die dem anzupassenden Unterträger entsprechen; und
Senden (504) eines Unterträgers nach der Modulation und der Leistungszuteilung zu dem effektiven Zeitpunkt von dem Sendeende an das Empfangsende.

4. Verfahren nach Anspruch 3, wobei
die Trimmeranforderungsnachricht einen Unterträgerindex des anzupassenden Unterträgers und Modulationsbefehlsinformationen und Leistungsinformationen umfasst, die dem Unterträgerindex des anzupassenden Unterträgers entsprechen; und
die Modulationsbefehlsinformationen und die Leistungsinformationen, die dem Unterträgerindex des anzupassenden Unterträgers entsprechen, einen Bitabbildungsparameter und einen Leistungszuteilungsparameter umfassen, wobei
der Unterträgerindex verwendet wird, um einen aktuell anzupassenden Unterträger anzuzeigen; der Bitabbildungsparameter eine Übereinstimmung zwischen einem Bit und einem Symbol ist und verwendet wird, um einen Modulationsbefehl anzuzeigen, der dem aktuell anzupassenden Unterträger entspricht; und der Leistungszuteilungsparameter verwendet wird, um Leistungsinformationen anzuzeigen, die von dem aktuell anzupassenden Unterträger verwendet werden, und die Leistungsinformationen eine Sendeleistung des aktuell anzupassenden Unterträgers nach der Anpassung sind, oder ein Verhältnis der Sendeleistung des aktuell anzupassenden Unterträgers nach der Anpassung sind, um eine gesamte Sendeleistung voreinzustellen.

5. Verfahren nach Anspruch 3 oder 4, wobei
das Ermitteln eines effektiven Zeitpunkts durch das Sendeende umfasst:
Ermitteln, durch das Sendeende, des effektiven Zeitpunkts gemäß einer Berechnungsregel für einen voreingestellten effektiven Zeitpunkt, wobei
die Berechnungsregel für einen voreingestellten effektiven Zeitpunkt lautet:
Ermitteln eines Zeitpunkts, der eine voreingestellte Dauer nach einem aktuellen Augenblick eines Sendens einer Trimmerantwortnachricht ist, als den effektiven Zeitpunkt, oder Ermitteln, gemäß einer zuvor erfassten Zieldauer, die für aktuell zu sendende Zieldaten des Sendeendes erforderlich ist, eines Zeitpunkts, der die Zieldauer nach einem aktuellen Augenblick eines Sendens einer Trimmerantwortnachricht ist, als den effektiven Zeitpunkt.

6. Empfangsende (600), **dadurch gekennzeichnet, dass** es umfasst:
eine Ermittlungseinheit (601), die konfiguriert ist zum: wenn zwei der folgenden Bedingungen erfüllt werden: eine Systembitfehlerrate ist niedriger als ein voreingestellter Schwellenwert und eine Anzahl von Unterträgern, auf denen eine Signal-Rausch-Verhältnis-Verschlechterung (Signal to Noise Ratio degradation, SNR-Verschlechterung) in einem optischen Signal auftritt, überschreitet einen vorbestimmten numerischen Bereich, Ermitteln, gemäß einem SNR eines anzupassenden Unterträgers, von Modulationsbefehlsinformationen und von Leistungsinformationen, die dem anzupassenden Unterträger entsprechen, wobei der anzupassende Unterträger mindestens ein Unterträger aus den Unterträgern ist, auf denen eine Signal-Rausch-Verhältnis-Verschlechterung auftritt;
eine Sendeeinheit (602), die konfiguriert ist zum Senden einer Trimmeranforderungsnachricht an ein Sendende, wobei die Trimmeranforderungsnachricht die Modulationsbefehlsinformationen und die Leistungsinformationen umfasst, die dem anzupassenden Unterträger entsprechen; und
eine Empfangseinheit (603), die konfiguriert ist zum Empfangen eines effektiven Zeitpunkts, der von dem Sendende gesendet wird, wobei die Empfangseinheit insbesondere konfiguriert ist zum Empfangen einer Trimmerantwortnachricht, die von dem Sendende gesendet wird, wobei die Trimmerantwortnachricht den effektiven Zeitpunkt umfasst; wobei die Trimmerantwortnachricht außerdem ein Antwortkennzeichenbit umfasst, und wobei das Antwortkennzeichenbit verwendet wird, um anzuzeigen, ob das Sendeende eine Modulation an dem, und eine Leistungszuteilung für den, anzupassenden Unterträger gemäß den Modulationsbefehlsinformationen und den Leistungsinformationen ausführt, die dem anzupassenden Unterträger entsprechen;
wobei die Empfangseinheit (603) außerdem konfiguriert ist zum Empfangen eines Unterträgers zu dem effektiven Zeitpunkt, indem ein Demodulationsbefehl verwendet wird, der dem anzupassenden Unterträger entspricht, wobei der Demodulationsbefehl, der dem anzupassenden Unterträger entspricht, einem Modulationsbefehl entspricht, der dem anzupassenden Unterträger entspricht.

7. Empfangsende nach Anspruch 6, wobei
die Trimmeranforderungsnachricht einen Unterträgerindex des anzupassenden Unterträgers und Modulationsbefehlsinformationen und Leistungsinformationen umfasst, die dem Unterträgerindex des anzupassenden Unterträgers entsprechen; und die Modulationsbefehlsinformationen und die Leistungsinformationen, die dem Unterträgerindex des anzupassenden Unterträgers entsprechen, einen Bitabbildungsparameter und einen Leistungszuteilungsparameter umfassen, wobei
der Unterträgerindex verwendet wird, um einen aktuell anzupassenden Unterträger anzuzeigen; der Bitabbildungsparameter eine Übereinstimmung zwischen einem Bit und einem Symbol ist und verwendet wird, um einen Modulationsbefehl anzuzeigen, der dem aktuell anzupassenden Unterträger entspricht; und der Leistungszuteilungsparameter verwendet wird, um Leistungsinformationen anzuzeigen, die von dem aktuell anzupassenden Unterträger verwendet werden, und die Leistungsinformationen eine Sendeleistung des aktuell anzupassenden Unterträgers nach der Anpassung sind, oder ein Verhältnis der Sendeleistung des aktuell anzupassenden Unterträgers nach der Anpassung sind, um eine gesamte Sendeleistung voreinzustellen.

8. Sendeende (800), **dadurch gekennzeichnet, dass** es umfasst:
eine Empfangseinheit (801), die konfiguriert ist zum Empfangen einer Trimmeranforderungsnachricht, die von dem Empfangsende gesendet wird, wobei die Trimmeranforderungsnachricht Modulationsbefehlsinformationen und Leistungsinformationen umfasst, die dem anzupassenden Unterträger in einem optischen Signal entsprechen;
eine Ermittlungseinheit (802), die konfiguriert ist zum: Ermitteln eines effektiven Zeitpunkts;
eine Sendeeinheit (803), die konfiguriert ist zum Senden des effektiven Zeitpunkts, der von der Ermittlungseinheit ermittelt wurde, an das Empfangsende; wobei die Sendeeinheit insbesondere konfiguriert ist zum Senden der Trimmerantwortnachricht an das Empfangsende, wobei die Trimmerantwortnachricht den effektiven Zeitpunkt umfasst; wobei die Trimmerantwortnachricht außerdem ein Antwortkennzeichenbit umfasst, und wobei das Antwortkennzeichenbit verwendet wird, um anzuzeigen, ob das Sendeende eine Modulation an dem, und eine Leistungszuteilung für den, anzupassenden Unterträger gemäß den Modulationsbefehlsinformationen und den Leistungsinformationen ausführt, die dem anzupassenden Unterträger entsprechen; und
eine Modulations- und Leistungszuteilungseinheit (804), die konfiguriert ist zum Ausführen einer Modulation an dem, und einer Leistungszuteilung für den, anzupassenden Unterträger gemäß den Modulationsbefehlsinformationen und den Leistungsinformationen, die dem anzupassenden Unterträger entsprechen; wobei
die Sendeeinheit (803) außerdem konfiguriert ist zum Senden eines Unterträgers nach der Modulation und der Leistungszuteilung zu dem effektiven Zeitpunkt an das Empfangsende.

9. Sendeende nach Anspruch 8, wobei
die Trimmeranforderungsnachricht einen Unterträgerindex des anzupassenden Unterträgers und Modulationsbefehlsinformationen und Leistungsinformationen umfasst, die dem Unterträgerindex des anzupassenden Unterträgers entsprechen; und
die Modulationsbefehlsinformationen und die Leistungsinformationen, die dem Unterträgerindex des anzupassenden Unterträgers entsprechen, einen Bitabbildungsparameter und einen Leistungszuteilungsparameter umfassen, wobei
der Unterträgerindex verwendet wird, um einen aktuell anzupassenden Unterträger anzuzeigen; der Bitabbildungsparameter eine Übereinstimmung zwischen einem Bit und einem Symbol ist und verwendet wird, um einen Modulationsbefehl anzuzeigen, der dem aktuell anzupassenden Unterträger entspricht; und der Leistungszuteilungsparameter verwendet wird, um Leistungsinformationen anzuzeigen, die von dem aktuell anzupassenden Unterträger verwendet werden, und die Leistungsinformationen eine Sendeleistung des aktuell anzupassenden Unterträgers nach der Anpassung sind, oder ein Verhältnis der Sendeleistung des aktuell anzupassenden Unterträgers nach der Anpassung sind, um eine gesamte Sendeleistung voreinzustellen.

10. Sendeende nach Anspruch 8 oder 9, wobei
die Ermittlungseinheit insbesondere konfiguriert ist zum Ermitteln des effektiven Zeitpunkts gemäß einer Berechnungsregel für einen voreingestellten effektiven Zeitpunkt, wobei
die Berechnungsregel für einen voreingestellten effektiven Zeitpunkt lautet:
Ermitteln eines Zeitpunkts, der eine voreingestellte Dauer nach einem aktuellen Augenblick eines Sendens einer Trimmerantwortnachricht ist, als den effektiven Zeitpunkt, oder Ermitteln, gemäß einer zuvor erfassten Zieldauer, die für aktuell zu sendende Zieldaten des Sendeendes erforderlich ist, eines Zeitpunkts, der die Zieldauer nach einem aktuellen Augenblick eines Sendens einer Trimmerantwortnachricht ist, als den effektiven Zeitpunkt.

11. Optisches orthogonalen Frequenzmultiplexsystem (Optical Orthogonal Frequency Division Multiplexing system, optisches OFDM-System), **dadurch gekennzeichnet, dass** es ein Empfangsende und ein Sendeende umfasst, wobei das Empfangsende das Empfangsende nach Anspruch 6 oder 7 ist und das Sendeende das Sendeende nach einem der Ansprüche 8 bis 10 ist.

## Revendications

1. Procédé de communication, **caractérisé par le fait qu'**il comprend les étapes suivantes
lorsque deux des conditions suivantes sont satisfaites : un taux d'erreur sur les bits système est inférieur à un seuil prédéfini, et une quantité de sous-porteuses, sur lesquelles une dégradation du rapport signal / bruit, SNR, se produit, dans un signal optique excède une plage numérique prédéterminée, déterminer (401), par une extrémité de réception selon un SNR d'une sous-porteuse devant être ajustée, des informations d'ordre de modulation et des informations de puissance qui correspondent à la sous-porteuse devant être ajustée, la sous-porteuse devant être ajustée étant au moins une sous-porteuse dans les sous-porteuses sur lesquelles une dégradation SNR se produit ;
envoyer (402), par l'extrémité de réception, un message de requête de trimmer à une extrémité de transmission, le message de requête de trimmer comportant les informations d'ordre de modulation et les informations de puissance qui correspondent à la sous-porteuse devant être ajustée ;
recevoir (403), par l'extrémité de réception, un point temporel effectif envoyé par l'extrémité de transmission ; l'étape de réception, par l'extrémité de réception, d'un point temporel effectif envoyé par l'extrémité de transmission comprenant : recevoir, par l'extrémité de réception, un message de réponse de trimmer envoyé par l'extrémité de transmission, le message de réponse de trimmer comportant le point temporel effectif ; le message de réponse de trimmer comportant en outre un bit indicateur de réponse, et le bit indicateur de réponse étant utilisé pour indiquer si l'extrémité de transmission exécute une modulation sur et une attribution de puissance pour la sous-porteuse devant être ajustée selon les informations d'ordre de modulation et les informations de puissance qui correspondent à la sous-porteuse devant être ajustée ; et
recevoir (404), par l'extrémité de réception, une sous-porteuse au point temporel effectif en utilisant un ordre de démodulation correspondant à la sous-porteuse devant être ajustée, l'ordre de démodulation correspondant à la sous-porteuse devant être ajustée correspondant à un ordre de modulation correspondant à la sous-porteuse devant être ajustée.

2. Procédé selon la revendication 1, dans lequel :
le message de requête de trimmer comprend un index de sous-porteuse de la sous-porteuse devant être ajustée, et des informations d'ordre de modulation et des informations de puissance qui correspondent à l'index de sous-porteuse de la sous-porteuse devant être ajustée ; et
les informations d'ordre de modulation et les informations de puissance qui correspondent à l'index de sous-porteuse de la sous-porteuse devant être ajustée comprennent un paramètre de mappage binaire et un paramètre d'attribution de puissance,
l'index de sous-porteuse étant utilisé pour indiquer une sous-porteuse devant être ajustée courante ; le paramètre de mappage binaire étant une correspondance entre un bit et un symbole, et étant utilisé pour indiquer un ordre de modulation correspondant à la sous-porteuse devant être ajustée courante ; et le paramètre d'attribution de puissance étant utilisé pour indiquer des informations de puissance utilisées par la sous-porteuse devant être ajustée courante, et les informations de puissance étant une puissance de transmission de la sous-porteuse devant être ajustée courante après ajustement, ou un rapport entre une puissance de transmission de la sous-porteuse devant être ajustée courante après ajustement et une puissance de transmission totale prédéfinie.

3. Procédé de communication, **caractérisé par le fait qu'**il comprend les étapes suivantes :
recevoir (501), par une extrémité de transmission, un message de requête de trimmer envoyé par une extrémité de réception, le message de requête de trimmer comportant des informations d'ordre de modulation et des informations de puissance qui correspondent à une sous-porteuse devant être ajustée dans un signal optique ;
déterminer (502), par l'extrémité de transmission, un point temporel effectif, et envoyer le point temporel effectif à l'extrémité de réception ; l'étape consistant à envoyer le point temporel effectif à l'extrémité de réception comprenant : envoyer, par l'extrémité de transmission, le message de réponse de trimmer à l'extrémité de réception, le message de réponse de trimmer comportant le point temporel effectif ; le message de réponse de trimmer comportant en outre un bit indicateur de réponse, et le bit indicateur de réponse étant utilisé pour indiquer si l'extrémité de transmission exécute une modulation sur et une attribution de puissance pour la sous-porteuse devant être ajustée selon les informations d'ordre de modulation et les informations de puissance qui correspondent à la sous-porteuse devant être ajustée ; et
exécuter (503), par l'extrémité de transmission, une modulation sur et une attribution de puissance pour la sous-porteuse devant être ajustée selon les informations d'ordre de modulation et les informations de puissance qui correspondent à la sous-porteuse devant être ajustée ; et
envoyer (504), par l'extrémité de transmission, une sous-porteuse après une modulation et une attribution de puissance à l'extrémité de réception au point temporel effectif.

4. Procédé selon la revendication 3, dans lequel :
le message de requête de trimmer comporte un index de sous-porteuse de la sous-porteuse devant être ajustée, et des informations d'ordre de modulation et des informations de puissance qui correspondent à l'index de sous-porteuse de la sous-porteuse devant être ajustée ; et
les informations d'ordre de modulation et les informations de puissance qui correspondent à l'index de sous-porteuse de la sous-porteuse devant être ajustée comprennent un paramètre de mappage binaire et un paramètre d'attribution de puissance,
l'index de sous-porteuse étant utilisé pour indiquer une sous-porteuse devant être ajustée courante ; le paramètre de mappage binaire étant une correspondance entre un bit et un symbole, et étant utilisé pour indiquer un ordre de modulation correspondant à la sous-porteuse devant être ajustée courante ; et le paramètre d'attribution de puissance étant utilisé pour indiquer des informations de puissance utilisées par la sous-porteuse devant être ajustée courante, et les informations de puissance étant une puissance de transmission de la sous-porteuse devant être ajustée courante après ajustement, ou un rapport entre une puissance de transmission de la sous-porteuse devant être ajustée courante après ajustement et une puissance de transmission totale prédéfinie.

5. Procédé selon la revendication 3 ou 4, dans lequel :
l'étape de détermination, par l'extrémité de transmission, d'un point temporel effectif comprend de :
déterminer, par l'extrémité de transmission, le point temporel effectif selon une règle de calcul de point temporel effectif prédéfinie,
la règle de calcul de point temporel effectif prédéfinie étant de :
déterminer un point temporel qui est une durée prédéfinie après un moment courant d'envoi d'un message de réponse de trimmer comme le point temporel effectif, ou déterminer, selon la durée cible pré-acquise requise pour les données cible devant être envoyées courantes de l'extrémité de transmission, un point temporel qui est la durée cible après un moment courant d'envoi d'un message de réponse de trimmer comme le point temporel effectif.

6. Extrémité de réception (600), **caractérisée par le fait qu'**elle comprend :
une unité de détermination (601), configurée pour : lorsque deux des conditions suivantes sont satisfaites : un taux d'erreur sur les bits système est inférieur à un seuil prédéfini, et une quantité de sous-porteuses, sur lesquelles une dégradation du rapport signal / bruit, SNR, se produit, dans un signal optique excède une plage numérique prédéterminée, déterminer, selon un SNR d'une sous-porteuse devant être ajustée, des informations d'ordre de modulation et des informations de puissance qui correspondent à la sous-porteuse devant être ajustée, la sous-porteuse devant être ajustée étant au moins une sous-porteuse dans les sous-porteuses sur lesquelles une dégradation SNR se produit ;
une unité d'envoi (602), configurée pour envoyer un message de requête de trimmer à une extrémité de transmission, le message de requête de trimmer comportant les informations d'ordre de modulation et les informations de puissance qui correspondent à la sous-porteuse devant être ajustée ; et
une unité de réception (603), configurée pour recevoir un point temporel effectif envoyé par l'extrémité de transmission, l'unité de réception étant configurée spécifiquement pour recevoir un message de réponse de trimmer envoyé par l'extrémité de transmission, le message de réponse de trimmer comportant le point temporel effectif ; le message de réponse de trimmer comportant en outre un bit indicateur de réponse, et le bit indicateur de réponse étant utilisé pour indiquer si l'extrémité de transmission exécute une modulation sur et une attribution de puissance pour la sous-porteuse devant être ajustée selon les informations d'ordre de modulation et les informations de puissance qui correspondent à la sous-porteuse devant être ajustée ;
l'unité de réception (603) est en outre configurée pour recevoir une sous-porteuse au point temporel effectif en utilisant un ordre de démodulation correspondant à la sous-porteuse devant être ajustée, l'ordre de démodulation correspondant à la sous-porteuse devant être ajustée correspondant à un ordre de modulation correspondant à la sous-porteuse devant être ajustée.

7. Extrémité de réception selon la revendication 6, dans laquelle :
le message de requête de trimmer comprend un index de sous-porteuse de la sous-porteuse devant être ajustée, et des informations d'ordre de modulation et des informations de puissance qui correspondent à l'index de sous-porteuse de la sous-porteuse devant être ajustée ; et
les informations d'ordre de modulation et les informations de puissance qui correspondent à l'index de sous-porteuse de la sous-porteuse devant être ajustée comprennent un paramètre de mappage binaire et un paramètre d'attribution de puissance,
l'index de sous-porteuse étant utilisé pour indiquer une sous-porteuse devant être ajustée courante ; le paramètre de mappage binaire étant une correspondance entre un bit et un symbole, et étant utilisé pour indiquer un ordre de modulation correspondant à la sous-porteuse devant être ajustée courante ; et le paramètre d'attribution de puissance étant utilisé pour indiquer des informations de puissance utilisées par la sous-porteuse devant être ajustée courante, et les informations de puissance étant une puissance de transmission de la sous-porteuse devant être ajustée courante après ajustement, ou un rapport entre une puissance de transmission de la sous-porteuse devant être ajustée courante après ajustement et une puissance de transmission totale prédéfinie.

8. Extrémité de transmission (800), **caractérisée par le fait qu'**elle comprend :
une unité de réception (801), configurée pour recevoir un message de requête de trimmer envoyé par une extrémité de réception, le message de requête de trimmer comportant des informations d'ordre de modulation et des informations de puissance qui correspondent à une sous-porteuse devant être ajustée dans un signal optique ;
une unité de détermination (802), configurée pour déterminer un point temporel effectif ;
une unité d'envoi (803), configurée pour envoyer le point temporel effectif déterminé par l'unité de détermination à l'extrémité de réception ; l'unité d'envoi étant configurée spécifiquement pour envoyer le message de réponse de trimmer à l'extrémité de réception, le message de réponse de trimmer comportant le point temporel effectif ; le message de réponse de trimmer comportant en outre un bit indicateur de réponse, et le bit indicateur de réponse étant utilisé pour indiquer si l'extrémité de transmission exécute une modulation sur et une attribution de puissance pour la sous-porteuse devant être ajustée selon les informations d'ordre de modulation et les informations de puissance qui correspondent à la sous-porteuse devant être ajustée ; et
une unité de modulation et d'attribution de puissance (804), configurée pour exécuter une modulation sur et une attribution de puissance pour la sous-porteuse devant être ajustée selon les informations d'ordre de modulation et les informations de puissance qui correspondent à la sous-porteuse devant être ajustée,
l'unité d'envoi (803) étant en outre configurée pour envoyer une sous-porteuse après une modulation et une attribution de puissance à l'extrémité de réception au point temporel effectif.

9. Extrémité de transmission selon la revendication 8, dans laquelle :
le message de requête de trimmer comporte un index de sous-porteuse de la sous-porteuse devant être ajustée, et des informations d'ordre de modulation et des informations de puissance qui correspondent à l'index de sous-porteuse de la sous-porteuse devant être ajustée ; et
les informations d'ordre de modulation et les informations de puissance qui correspondent à l'index de sous-porteuse de la sous-porteuse devant être ajustée comprennent un paramètre de mappage binaire et un paramètre d'attribution de puissance,
l'index de sous-porteuse étant utilisé pour indiquer une sous-porteuse devant être ajustée courante ; le paramètre de mappage binaire étant une correspondance entre un bit et un symbole, et étant utilisé pour indiquer un ordre de modulation correspondant à la sous-porteuse devant être ajustée courante ; et le paramètre d'attribution de puissance étant utilisé pour indiquer des informations de puissance utilisées par la sous-porteuse devant être ajustée courante, et les informations de puissance étant une puissance de transmission de la sous-porteuse devant être ajustée courante après ajustement, ou un rapport entre une puissance de transmission de la sous-porteuse devant être ajustée courante après ajustement et une puissance de transmission totale prédéfinie.

10. Extrémité de transmission selon la revendication 8 ou 9, dans laquelle :
l'unité de détermination est configurée spécifiquement pour déterminer le point temporel effectif selon une règle de calcul de point temporel effectif prédéfinie,
la règle de calcul de point temporel effectif prédéfinie étant de :
déterminer un point temporel qui est une durée prédéfinie après un moment courant d'envoi d'un message de réponse de trimmer comme le point temporel effectif, ou déterminer, selon la durée cible pré-acquise requise pour les données cible devant être envoyées courantes de l'extrémité de transmission, un point temporel qui est la durée cible après un moment courant d'envoi d'un message de réponse de trimmer comme le point temporel effectif.

11. Système de multiplexage par répartition orthogonale de la fréquence, OFDM, optique, **caractérisé par le fait qu'**il comprend une extrémité de réception et une extrémité de transmission, dans lequel :
l'extrémité de réception est l'extrémité de réception selon la revendication 6 ou 7, et
l'extrémité de transmission est l'extrémité de transmission selon l'une quelconque des revendications 8 à 10.
